# EUROPEAN PATENT APPLICATION

(11) **EP 4 481 840 A1**
(43) Date of publication of application: **25.12.2024**
(21) Application number: 23194091.7
(22) Date of filing: 29.08.2023
(51) Int. Cl.: H01M 4/04, H01M 4/131, H01M 4/36, H01M 4/525, H01M 4/62

(54) **COMPOSITE ELECTRODE AND PREPARATION METHOD THEREOF**

(30) Priority: 21.06.2023 TW 112123273
(71) Applicant: Advanced Lithium Electrochemistry Co., Ltd., Taoyuan City 330 (TW)
(72) Inventor: Lin, Yuan-Kai, 330 Taoyuan City (TW); Hsieh, Han-Wei, 330 Taoyuan City (TW); Huang, Chen-Yi, 330 Taoyuan City (TW); Li, Yi-Ting, 330 Taoyuan City (TW)
(74) Representative: 2K Patentanwälte Blasberg Kewitz & Reichel

(57) **Abstract**

A composite electrode (1) and a preparation method thereof are disclosed. The composite electrode (1) includes a composite positive electrode material layer (3) coated on a carrying surface (21) of an electrode plate (2). The composite positive electrode material layer (3) includes plural positive electrode material particles (10), a first conductive carbon (20) and a Li-Nafion polymer material (30). The positive electrode material particles (10) are composed of ternary materials. The first conductive carbon (20) is pre-coated on surfaces of the positive electrode material particles (10) by dry mechanical mixing. A weight percent of the first conductive carbon (20) relative to the positive electrode material particles (10) is ranged from 1 wt.% to 5.5 wt.%. The Li-Nafion polymer material (30) covers the surfaces of the positive electrode material particles (10) and is bonded among the surfaces of the positive electrode material particles (10). A weight percent of the Li-Nafion polymer material (30) relative to the positive electrode material particles (10) is ranged from 10 wt.% to 20 wt.%.

## Description

### FIELD OF THE INVENTION

The present disclosure relates to an electrode of a secondary battery, and more particularly to a composite electrode and a preparation method thereof, which prepares a composite positive electrode sheet through a dry-process surface pretreatment of conductive carbon cooperated with a Li-Nafion polymer material for improving the high-rate charge and discharge performance and optimizing the capacity retention rate.

### BACKGROUND OF THE INVENTION

In recent years, the performance requirements for the electric vehicles and the energy storage devices are increased, and the secondary batteries used therein are also required to have good performance. Among many types of batteries, lithium-ion batteries using the ternary positive electrode materials, such as nickel-cobalt-manganese (NCM), have the characteristics of high capacity and have become the mainstream choice at present.

Since the nickel content in the above-mentioned positive electrode material is directly proportional to its power density, and the price of cobalt metal fluctuates violently, the current mainstream development trend is to increase the nickel content in the positive electrode material to increase the power density and reduce manufacturing costs. However, the high-nickel positive electrode material is prone to negative reactions with the electrolyte due to its high nickel content, and it results in a decrease in cycle life.

Conventionally, inorganic metal oxides are used to modify the surface of the high-nickel material. However, it is difficult to obtain a uniform and complete coating through the normal engineering methods. Furthermore, the metal oxides are usually coated through the conventional liquid phase method, and the selection and recycle of the solvent need to be evaluated. It needs to carry out an additional heat treatment procedure, so that the process and cost of material production are increased significantly.

On the other hand, in the process of producing the positive electrode material of the lithium-ion secondary battery into an electrode, the binder is also a key component and indispensable. If an improper binder is selected, it may affect the performance of the positive electrode material in the electrode after surface modification.

Therefore, there is a need to provide a composite electrode and a preparation method thereof, which prepares a composite positive electrode sheet through a dry-process surface pretreatment of conductive carbon cooperated with a Li-Nafion polymer material, so as to improve the high-rate charge and discharge performance, optimize the capacity retention rate, and obviate the drawbacks encountered by the prior arts.

### SUMMARY OF THE INVENTION

An object of the present disclosure is to provide a composite electrode and a preparation method thereof for a secondary battery. The conductive carbon is pre-coated on the surface of the high-nickel NCM positive electrode material through a dry mechanofusion method to improve the surface hydrophobicity of the high-nickel NCM positive electrode material and improve the coating performance of the lithiated Nafion (Li-Nafion) polymer material in the subsequent process, so that the original spherical secondary particle morphology of the high-nickel NCM positive electrode material is maintained effectively. The dry mechanofusion process is fast and does not require additional solvent and gas protection. An appropriate amount of conductive carbon can be coated on the surface of the high-nickel NCM positive electrode material through the dry mechanofusion process, it helps to improve the hydrophobicity of the surface of the positive electrode material, and improve the coating performance of (Li-Nafion) polymer material on the surface of high-nickel NCM material, without affecting the morphology of the NCM positive electrode material. Furthermore, the Li-Nafion polymer material is used to replace the conventional binder (PVDF, PAA, CMC-SBR...) used in the secondary battery process. Since the Li-Nafion polymer material has excellent properties of ion-conducting, it can have a better capacity retention rate when the composite positive electrode is charged and discharged under high rate (6CC/6CD) conditions. In other words, by pre-treating the surface with the conductive carbon, it facilitates the Li-Nafion polymer material as the functional coating to be more uniformly coated on the surface of the high-nickel positive electrode material. Moreover, the performance of fast charging and discharging, and the cycle life are improved. In that, a fast and effective means to obtain a functional coating that can be used as a binder and uniformly coated is provided.

In accordance with an aspect of the present disclosure, a composite electrode is provided and includes an electrode plate and a composite positive electrode material layer. The electrode plate includes a carrying surface. The composite positive electrode material layer is coated on the carrying surface of the electrode plate. The composite positive electrode material layer includes a plurality of positive electrode material particles, a first conductive carbon and a Li-Nafion polymer material. The plurality of positive electrode material particles are composed of ternary materials with the composition of Li[NiₓCo_{y}Mn_{z}]O₂, and x+y+z=1, 0.8<x<1, 0<y<0.2, 0<z<0.2. The first conductive carbon is pre-coated on surfaces of the plurality of positive electrode material particles through a dry mechanical mixing method, wherein a weight percent of the first conductive carbon relative to the plurality of positive electrode material particles is ranged from 1 wt.% to 5.5 wt.%. The Li-Nafion polymer material covers the surfaces of the plurality of positive electrode material particles and is bonded among the surfaces of the plurality of positive electrode material particles, wherein a weight percent of the Li-Nafion polymer material relative to the plurality of positive electrode material particles is ranged from 10 wt.% to 20 wt.%.

In an embodiment, the dry mechanical mixing method is a mechanical fusion method including steps of mixing at a first rotational speed of 600 rpm for 10 minutes and mixing at a second rotational speed of 4200 rpm for 30 minutes, and having an operating temperature ranged from 30°C to 40°C.

In an embodiment, the Li-Nafion polymer material is mixed with a solvent to form a Li-Nafion polymer solution, and then mixed with the plurality of positive electrode material particles and the first conductive carbon, wherein the Li-Nafion polymer solution has a weight percent concentration of 10 wt.%, the solvent is composed of ethanol and n-butanol, and a weight ratio of the ethanol to the n-butanol is 1:2.

In an embodiment, the composite positive electrode material layer further includes a second conductive carbon, and the second conductive carbon is mixed with the plurality of positive electrode material particles pre-coated with the first conductive carbon and the Li-Nafion polymer material, wherein a weight percent of the second conductive carbon relative to the plurality of positive electrode material particles is ranged from 5.5 wt.% to 15 wt.%.

In an embodiment, the composite positive electrode material layer has a compacted density ranged from 3.1 g/cm³ to 3.3 g/cm³.

In an embodiment, the electrode plate is an aluminum plate.

In an embodiment, the plurality of positive electrode material particles have a first average particle size ranged from 10 µm to 20 µm, and the first conductive carbon has a second average particle size ranged from 50 nm to 200 nm.

In accordance with another aspect of the present disclosure, a preparation method of a composite electrode is provided and includes steps of: (a) providing a plurality of positive electrode material particles and a first conductive carbon, wherein the plurality of positive electrode material particles are composed of ternary materials with the composition of Li[NiₓCo_{y}Mn_{z}]O₂, and x+y+z=1, 0.8<x<1, 0<y<0.2, 0<z<0.2; (b) coating the first conductive carbon on surfaces of the plurality of positive electrode material particles through a dry mechanical mixing method, wherein a weight percent of the first conductive carbon relative to the plurality of positive electrode material particles is ranged from 1 wt.% to 5.5 wt.%; (c) providing a Li-Nafion polymer material, wherein a weight percent of the Li-Nafion polymer material relative to the plurality of positive electrode material particles is ranged from 10 wt.% to 20 wt.%; (d) mixing the Li-Nafion polymer material and the plurality of positive electrode material particles pre-coated with the first conductive carbon to form a composite positive electrode material slurry; (e) coating the composite positive electrode material slurry on a carrying surface of an electrode plate; and (f) drying to form the composite electrode, wherein the Li-Nafion polymer material covers the surfaces of the plurality of positive electrode material particles and is bonded among the surfaces of the plurality of positive electrode material particles.

In an embodiment, the dry mechanical mixing method in the step (b) is a mechanical fusion method comprising steps of mixing at a first rotational speed of 600 rpm for 10 minutes and mixing at a second rotational speed of 4200 rpm for 30 minutes, and having an operating temperature ranged from 30°C to 40°C.

In an embodiment, the Li-Nafion polymer material provided in the step (c) is mixed with a solvent to form a Li-Nafion polymer solution, and then mixed with the plurality of positive electrode material particles and the first conductive carbon, wherein the Li-Nafion polymer solution has a weight percent concentration of 10 wt.%, the solvent is composed of ethanol and n-butanol, and a weight ratio of the ethanol to the n-butanol is 1:2.

In an embodiment, a second conductive carbon is further added in the step (d), so that the second conductive carbon is mixed with the plurality of positive electrode material particles pre-coated with the first conductive carbon and the Li-Nafion polymer material, wherein a weight percent of the second conductive carbon relative to the plurality of positive electrode material particles is ranged from 5.5 wt.% to 15 wt.%.

In an embodiment, the composite positive electrode material slurry is coated on the carrying surface of the electrode plate through a doctor blade method in the step (e), and the composite positive electrode material slurry has a surface density ranged from 9 mg/cm² to 12 mg/cm².

In an embodiment, the composite positive electrode material layer has a compacted density ranged from 3.1 g/cm³ to 3.3 g/cm³.

In an embodiment, the electrode plate is an aluminum plate.

In an embodiment, the plurality of positive electrode material particles have a first average particle size ranged from 10 µm to 20 µm, and the first conductive carbon has a second average particle size ranged from 50 nm to 200 nm.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic structural view illustrating a composite electrode according to an embodiment of the present disclosure;
FIG. 2 is a schematic structural view illustrating the plurality of positive electrode material particles according to the embodiment of the present disclosure;
FIG. 3 is a schematic structural view illustrating the plurality of positive electrode material particles pre-coated with the first conductive carbon according to the embodiment of the present disclosure;
FIG. 4 shows SEM images of the plurality of positive electrode material particles of the present disclosure;
FIG. 5 shows SEM images of the plurality of positive electrode material particles pre-coated with the first conductive carbon of the present disclosure;
FIG. 6A shows the result of water droplet contact angle analysis of the plurality of positive electrode material particles compacted;
FIG. 6B shows the results of water droplet contact angle analysis of the plurality of positive electrode material particles pre-coated with the first co-conductive carbon compacted;
FIG. 7 shows the chemical structure of the Li-Nafion polymer material;
FIG. 8 is a flow chart of a preparation method of a composite electrode according to an embodiment of the present disclosure;
FIG. 9 shows the SEM /EDS analysis result of the comparative example;
FIG. 10 shows the SEM/EDS analysis result of the demonstrative example of the present disclosure;
FIG. 11A shows a cyclic charge/discharge testing of the comparative example at 0.1C/1C/3C/5C/6C;
FIG. 11B shows a cyclic charge/discharge testing of the demonstrative example of the present disclosure at 0.1C/1C/3C/5C/6C;
FIG. 11C is a comparison chart illustrating the specific capacity of the comparative example and the specific capacity of the demonstrative example of the present disclosure charged and discharged at 3C;
FIG. 11D is a comparison chart illustrating the specific capacity of the comparative example and the specific capacity of the demonstrative example of the present disclosure charged and discharged at 6C;
FIG. 12 shows a cyclic charge/discharge testing of the comparative example and the demonstrative example of the present disclosure under 1CC/1CD cycle test conditions;
FIG. 13 shows a cyclic charge/discharge testing of the comparative example and the demonstrative example of the present disclosure under 6CC/6CD cycle test conditions;
FIG. 14 shows a cyclic charge/discharge testing of the first PVDF comparative example and the second PVDF comparative example under 1CC/1CD cycle test conditions; and
FIG. 15 shows a cyclic charge/discharge testing of the first PVDF comparative example and the second PVDF comparative example under 6CC/6CD cycle test conditions.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

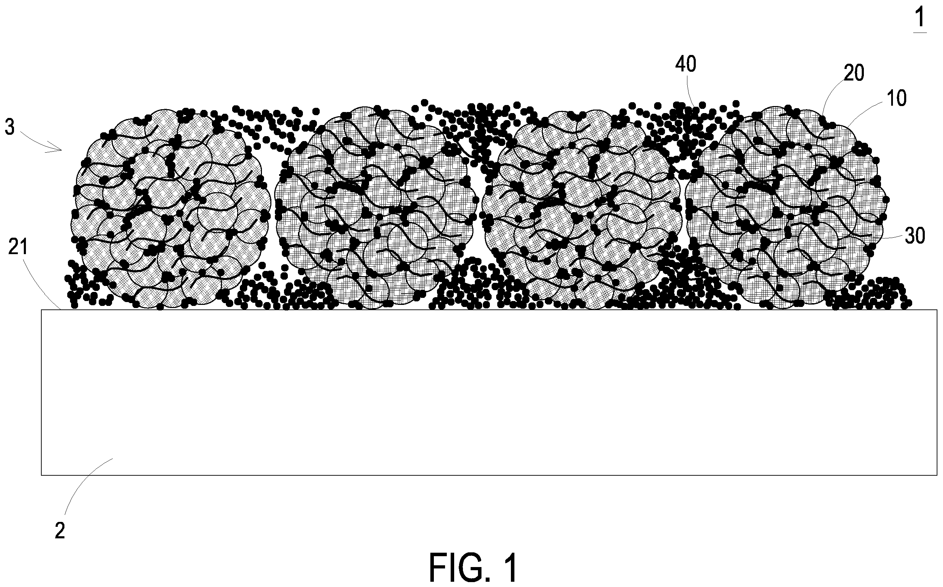

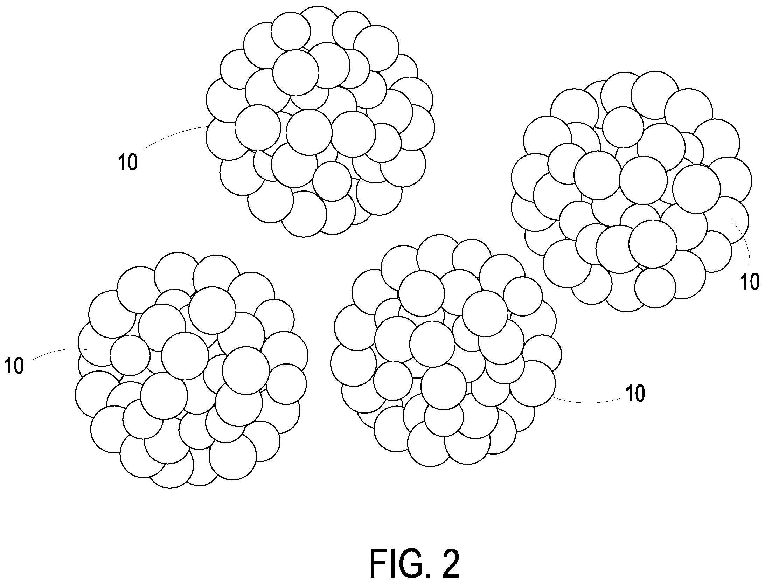

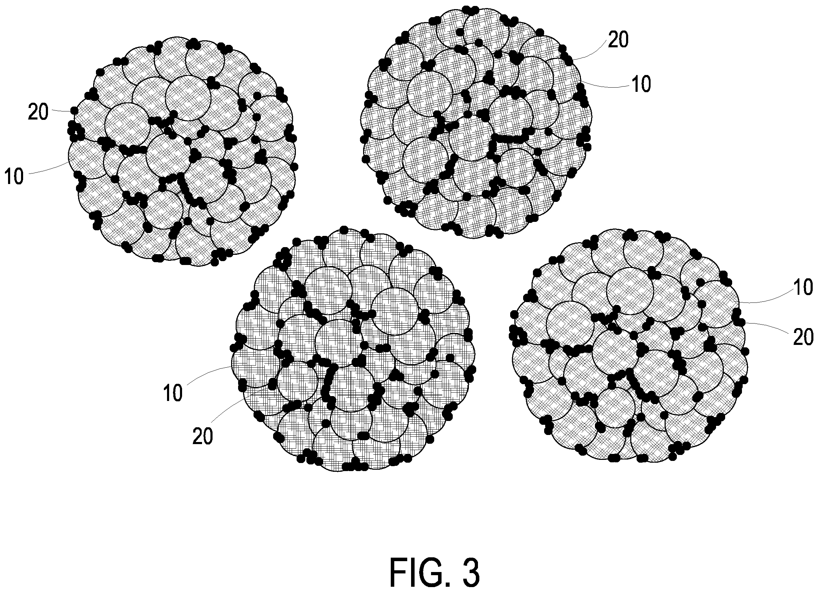

FIG. 1 is a schematic structural view illustrating a composite electrode according to an embodiment of the present disclosure. In the embodiment, a composite electrode 1 is provided in the present disclosure, which is a positive electrode suitable for a conventional lithium battery or a lithium metal battery. In the embodiment, the composite electrode 1 includes an electrode plate 2 and a composite positive electrode material layer 3. Preferably but not exclusively, the electrode plate 2 is a current collector of an aluminum plate including a carrying surface 21. The composite positive electrode material layer 3 is coated on the carrying surface 21 of the electrode plate 2 by a preparation method of the composite electrode according to the present disclosure. The composite positive electrode material layer 3 obtained by the preparation method of the present disclosure includes a plurality of positive electrode material particles 10, a first conductive carbon 20 and a Li-Nafion polymer material 30. The plurality of positive electrode material particles 10 are composed of ternary materials with the composition of Li[NiₓCo_{y}Mn_{z}]O₂, and x+y+z=1, 0.8<x<1, 0<y<0.2, 0<z<0.2. Preferably but not exclusively, the composition of the ternary materials has a high nickel content (the nickel content >80%). Notably, in the embodiment, the first conductive carbon 20 is pre-coated on surfaces of the plurality of positive electrode material particles 10 through a dry mechanical mixing method, such as a mechanical fusion method. Preferably but not exclusively, a weight percent of the first conductive carbon 20 relative to the plurality of positive electrode material particles 10 is ranged from 1 wt.% to 5.5 wt.%. FIG. 2 is a schematic structural view illustrating the plurality of positive electrode material particles according to the embodiment of the present disclosure. FIG. 3 is a schematic structural view illustrating the plurality of positive electrode material particles pre-coated with the first conductive carbon according to the embodiment of the present disclosure. In the embodiment, the first conductive carbon 20 is pre-coated on surfaces of the plurality of positive electrode material particles 10 through the mechanical fusion method, and it facilitates the first conductive carbon 20 to be uniformly distributed on the surfaces of the plurality of positive electrode material particles 10 in a dot-like form. In addition to reducing the impact on electrical performance due to uneven distribution of the conductive carbon or excessive addition during electrode fabrication, the surface properties of the plurality of positive electrode material particles 10 are further improved.

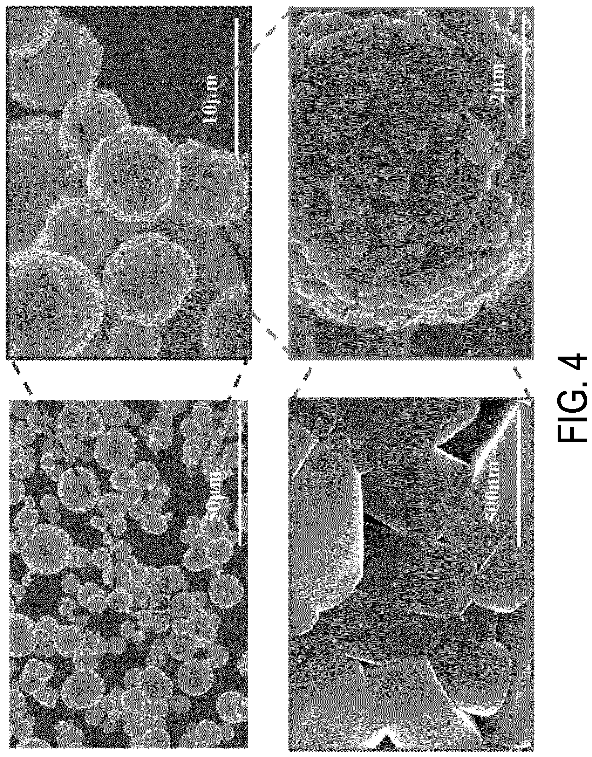

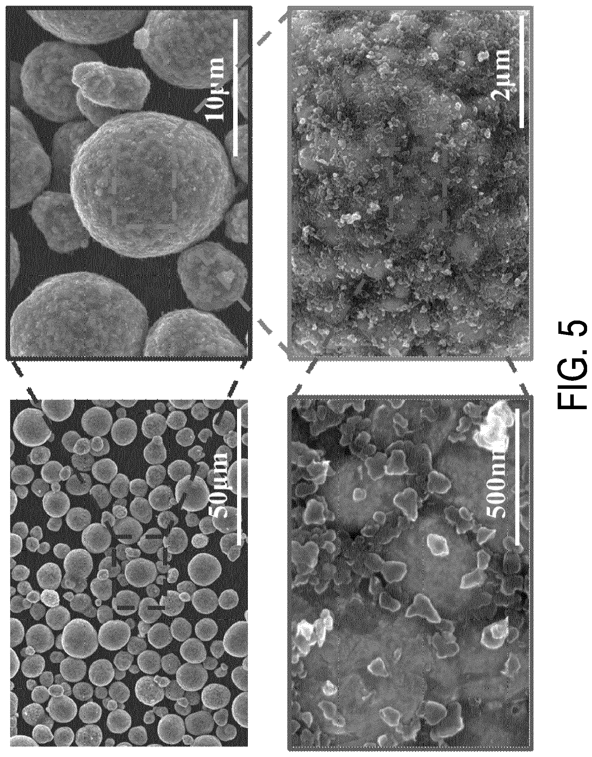

FIG. 4 shows SEM images of the plurality of positive electrode material particles of the present disclosure. FIG. 5 shows SEM images of the plurality of positive electrode material particles pre-coated with the first conductive carbon of the present disclosure. In the embodiment, the plurality of positive electrode material particles 10 have a first average particle size ranged from 10 µm to 20 µm, and the first conductive carbon 20 has a second average particle size ranged from 50 nm to 200 nm. The plurality of positive electrode material particles 10 are processed by the mechanical fusion mixing method, so that the first conductive carbon 20 is uniformly distributed on the surfaces of the plurality of positive electrode material particles 10 in a dot-like form, and the shape and the particle size of the plurality of positive electrode material particles 10 are not changed.

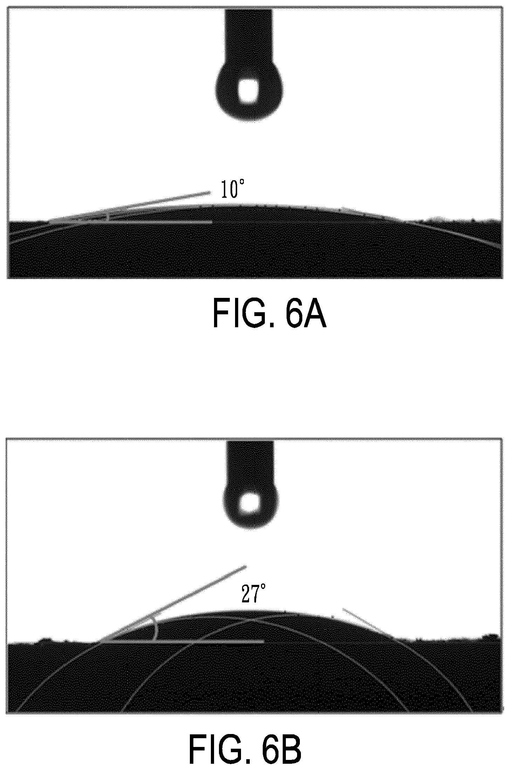

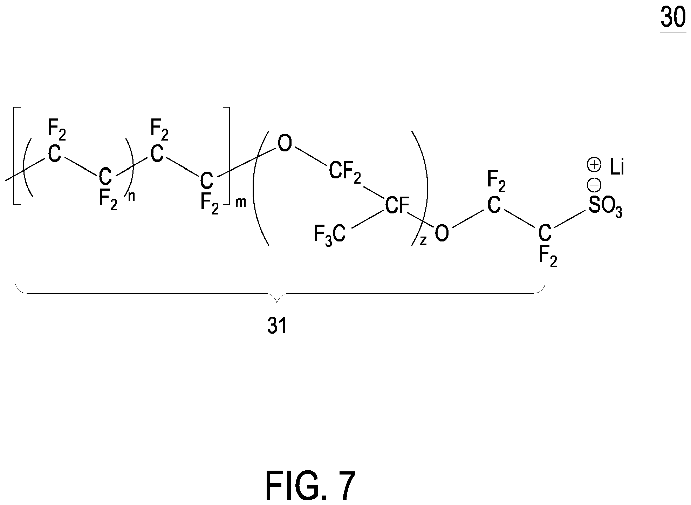

FIG. 6A shows the result of water droplet contact angle analysis of the plurality of positive electrode material particles compacted. FIG. 6B shows the results of water droplet contact angle analysis of the plurality of positive electrode material particles pre-coated with the first co-conductive carbon compacted. The powders of the plurality of positive electrode material particles 10 (which has the structure as shown in FIG. 2) are compacted and then tested to obtain the water droplet contact angle of about 10° , as shown in FIG. 6A. The powders of the plurality of positive electrode material particles 10 pre-coated with the first conductive carbon 20 (which has the structure as shown in FIG. 3) are compacted and then tested to the water droplet contact angle of about 27° , as shown in FIG. 6B. Comparing the above two results, it can be seen that when the plurality of positive electrode material particles 10 are pre-coated with the first conductive carbon 20 by the mechanical fusion mixing method, the hydrophobicity of the surfaces of the plurality of positive electrode material particles 10 can be increased. FIG. 7 shows the chemical structure of the Li-Nafion polymer material. As shown in FIG. 7, the structure of the Li-Nafion polymer material 30 includes a long-chain hydrophobic segment 31. Therefore, after the first conductive carbon 20 is coated on the surfaces of the plurality of positive electrode material particles 10 by the mechanical fusion mixing method, the surfaces of the plurality of positive electrode material particles 10 can be modified to have higher hydrophobicity. In this way, it is more beneficial to combine the plurality of positive electrode material particles 10 with the Li-Nafion polymer material 30. Certainly, the types, the composition ratio and the material properties of the plurality of positive electrode material particles 10 pre-coated with the first conductive carbon 20 and the Li-Nafion polymer material 30 selected to mix in the composite positive electrode material layer 3 are adjustable according to practical requirement, and not limited thereto. The preparation method of the composite electrode 1 of the present disclosure will be described below.

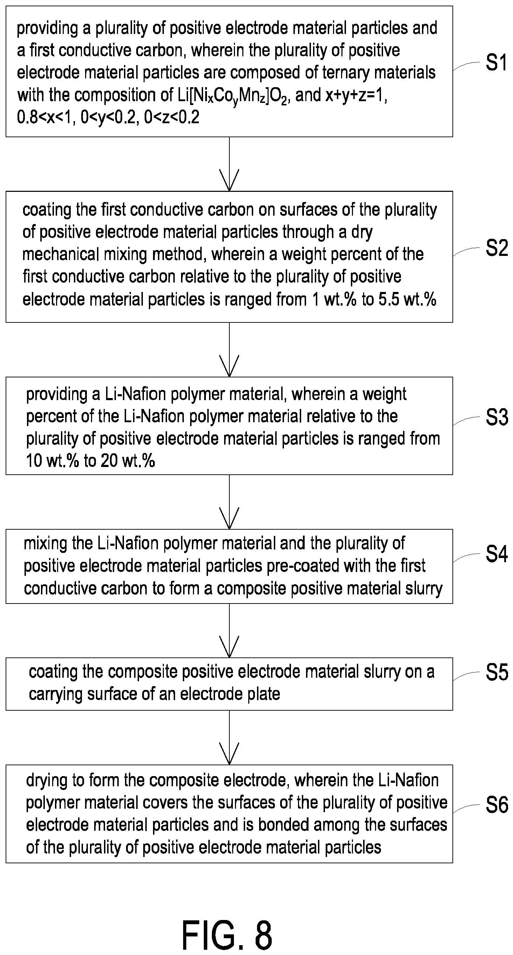

FIG. 8 is a flow chart of a preparation method of a composite electrode according to an embodiment of the present disclosure. In the embodiment, firstly as shown in the step S1, a plurality of positive electrode material particles 10 and a first conductive carbon 20 are provided. Preferably but not exclusively, the plurality of positive electrode material particles 10 are composed of ternary materials with the composition of Li[NiₓCo_{y}Mn_{z}]O₂, and x+y+z=1, 0.8<x<1, 0<y<0.2, and 0<z<0.2. In the embodiment, the plurality of positive electrode material particles 10 have a first average particle size ranged from 10 µm to 20 µm. Preferably but not exclusive, the first conductive carbon 20 is Super-P, and has a second average particle size ranged from 50 nm to 200 nm.

Then, as shown in the step S2, for the plurality of positive electrode material particles 10 and the first conductive carbon 20 in a specific ratio, the first conductive carbon 20 is coated on the surfaces of the plurality of positive electrode material particles 10 by, for example, a dry mechanical fusion mixing method, and the obtained structure is as shown in FIG 3. In the embodiment, a weight percent of the first conductive carbon relative to the plurality of positive electrode material particles 10 is ranged from 1 wt.% to 5.5 wt.%. In this way, an appropriate amount of the first conductive carbon 20 is uniformly distributed on the surfaces of the plurality of positive electrode material particles 10 in a dot-like form. Consequently, the surface modification of the plurality of positive electrode material particles 10 is achieved, and the shape and the particle size of the plurality of positive electrode material particles 10 are not changed. Notably, the weight percent of the first conductive carbon relative to the plurality of positive electrode material particles 10 is less than 5.5 wt.%, and it prevents the first conductive carbon 20 from over-coating the surfaces of the plurality of positive electrode material particles 10 and affecting the subsequent mixing and coating of Li-Nafion polymer material 30. On the other hand, when surface modification is carried out by mechanical fusion method, the mixing process includes steps of mixing at a first rotational speed of 600 rpm for 10 minutes and mixing at a second rotational speed of 4200 rpm for 30 minutes, and has a working temperature ranged from 30°C to 40°C. By controlling the mixing method, the working temperature, the rotational speed and the mixing time for surface modification and pre-coating, working temperature, rotation speed and time, it allows to avoid the structural defects caused by high temperature and excessive friction between particles. Moreover, at the same time, it ensures that the plurality of positive electrode material particles 10 can exert the effect of surface modification through the pre-coating of the first conductive carbon 20.

Furthermore, in the embodiment, a Li-Nafion polymer material 30 is provided, as shown in the step S3. In order to obtain a good coating effect, a weight percent of the Li-Nafion polymer material 30 relative to the plurality of positive electrode material particles 10 is ranged from 10 wt.% to 20 wt.%. In the embodiment, the Li-Nafion polymer material 30 is further mixed with a solvent to form a Li-Nafion polymer solution, and then mixed with the plurality of positive electrode material particles 10 and the first conductive carbon 20. Preferably but not exclusively, the Li-Nafion polymer solution has a weight percent concentration of 10 wt.%, the solvent is composed of ethanol and n-butanol, and a weight ratio of the ethanol to the n-butanol is 1:2. Certainly, the present disclosure is not limited thereto.

Thereafter, in the step S4, the plurality of positive electrode material particles 10 with the first conductive carbon 20 pre-coated thereon in the step S2 and the Li-Nafion polymer material 30 provided in the step S3 are mixed to form a composite positive electrode material slurry. Notably, in some embodiments, the composite positive electrode material layer 3 of the composite electrode 1 needs to add a higher content of conducive carbon, which exceeds the content of the first conductive carbon 20 in the step S2. In that, an additional content of conductive carbon can be added in the step S4 by adding the second conductive carbon 40, so that the additional conductive carbon is mixed well with the plurality of positive electrode material particles 10 with the first conductive carbon 20 pre-coated thereon and the Li-Nafion polymer material 30. Certainly, a weight percent of the second conductive carbon 40 relative to the plurality of positive electrode material particles 10 is adjustable according to the practical requirements. Preferably but not exclusively, the weight percent of the second conductive carbon 40 relative to the plurality of positive electrode material particles 10 is ranged from 5.5 wt.% to 15 wt.%.

In the step S5, the above composite positive electrode material slurry is coated on a carrying surface 21 of an electrode plate 2. Preferably but not exclusively, the composite positive electrode material slurry is coated on the carrying surface 21 of the electrode plate 2 through a doctor blade method. Preferably but not exclusively, the composite positive electrode material slurry coated on the carry surface 21 of the electrode plate 2 has a surface density ranged from 9 mg/cm² to 12 mg/cm². Certainly, the present disclosure is not limited thereto.

Finally, in the step S6, the composite positive electrode material slurry coated on the carry surface 21 of the electrode plate 2 is dried to form the composite electrode 1. The resulting structure is shown in FIG. 1. In the embodiment, the Li-Nafion polymer material 30 covers the surfaces of the plurality of positive electrode material particles 10 and is bonded among the surfaces of the plurality of positive electrode material particles 10.

In a demonstrative example, the NCM material of 495g is provided and served as the plurality of positive electrode material particles 10. The NCM material has the chemical formula of Li[Ni_{0.83}Co_{0.12}Mn_{0.05}]O₂ (Ni:Co:Mn=83:12:5) and the surface area BET = 0.32 m²/g. In addition, Super-P of 27.5 g is provided and served as the first conductive carbon 20, which is a precursor for the surface modification of the plurality of positive electrode material particles 10. The NCM of 495g and the Super-P of 27.5g are mixed through mechanical fusion method. Firstly, the mixing process is set at a low output power of 7.5% to mix at a first rotational speed of 600 rpm for 10 minutes. Then, the mixing process is set at an output power of 80% to mixed at a second rotational speed of 4200 rpm for 30 minutes. In order to avoid the high temperature generated by high-speed mixing from adversely affecting the sample, the working temperature of the equipment is controlled and ranged from 30°C to 40°C during the mixing process. The obtained surface-modified sample is shown in FIG. 5, which is called NCM@C.

In addition, the Li-Nafion polymer material 30 is provided in a solution form. For preparing the Li-Nafion polymer solution, LiOH·H₂O powder of 20.981 g is added into a 500 mL quantitative bottle, and the deionized water of 300 mL is added. After LiOH·H₂O is completely dissolved, additional deionized water is added to quantify to 500mL to complete the preparation of 1N LiOH solution. Another 250mL round bottom flask is provided, and 5% H-Nafion solution of 60 g is added into the round bottom flask. The H-Nafion solution is lithiated and titrated to pH=6 through the above 1N LiOH solution. Next, the Li-Nafion solution that has been titrated previously is concentrated under reduced pressure at a temperature ranged from 60°C to 80°C, so that the solvent is removed completely. Finally, after the previous solvent is removed completely, a solvent composed of ethanol and n-butanol with a weight ratio of 1:2 is added to form the Li-Nafion polymer solution with a weight precent concentration of 10 wt.%. After being completely dissolved, the pre-lithiated Li-Nafion polymer solution is obtained.

In the subsequent production of the composite electrode 1, NCM@C: Super-P (served as the second conductive carbon): 10 wt.% Li-Nafion solution=8.42g: 0.58g: 10g, are provided, and then added into a mixing bottle for mixing through a planetary rotary mixer. Those materials are mixed at a rotational speed of 1200 rpm for 10 minutes, so as to obtain the composite positive electrode material slurry. The composite positive electrode material slurry obtained is uniformly coated on an aluminum plate through the doctor blade method, and the composite positive electrode material slurry has a surface density ranged from 9 mg/cm² to 12 mg/cm². The coated semi-finished electrode is dried at 100°C for 1 hr. The dried semi-finished electrode is rolled by an electrode sheet rolling machine. In the rolling process, a compacted density of the composite electrode is controlled and ranged from 3.1 g/cm³ to 3.3 g/cm³. That is, the fabrication of the composite electrode 1 of the present disclosure is completed. The completed composite electrode 1 is cut into a circular electrode with a diameter of 1 cm by an electrode sheet cutting machine. Consequently, CR2032 button cell obtained thereby can be used for electrochemical analysis.

In a comparative example, the NCM material with the same positive electrode material but omitting the surface modification is called NCM. For production the electrode of the comparative example, NCM: Super-P (served as the second conductive carbon): 10 wt.% Li-Nafion solution=8g: 1g: 10g, are provided, and then added into a mixing bottle for mixing through a planetary rotary mixer. Those materials are mixed at a rotational speed of 1200 rpm for 10 minutes, so as to obtain the positive electrode material slurry. The positive electrode material slurry obtained is coated on an aluminum plate through the doctor blade method, and the positive electrode material slurry has a surface density ranged from 9 mg/cm² to 12 mg/cm². The coated semi-finished electrode is dried at 100°C for 1 hr. The dried semi-finished electrode is rolled by an electrode sheet rolling machine. In the rolling process, a compacted density of the composite electrode is controlled and ranged from 3.1 g/cm³ to 3.3 g/cm³. That is, the fabrication of the electrode of the comparative example is completed. The electrode of the comparative example is cut into a circular electrode with a diameter of 1 cm by an electrode sheet cutting machine. Consequently, CR2032 button cell obtained thereby can be used for electrochemical analysis.

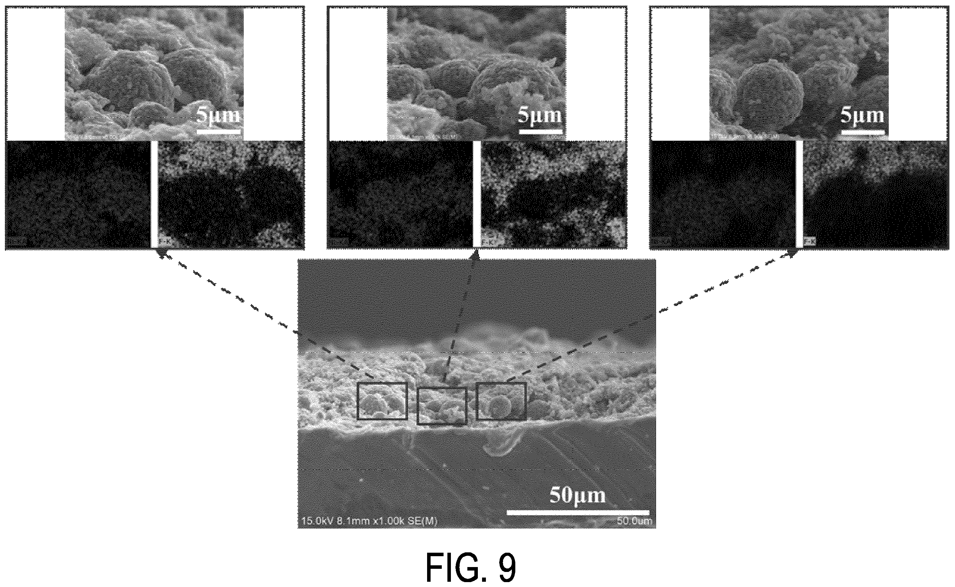

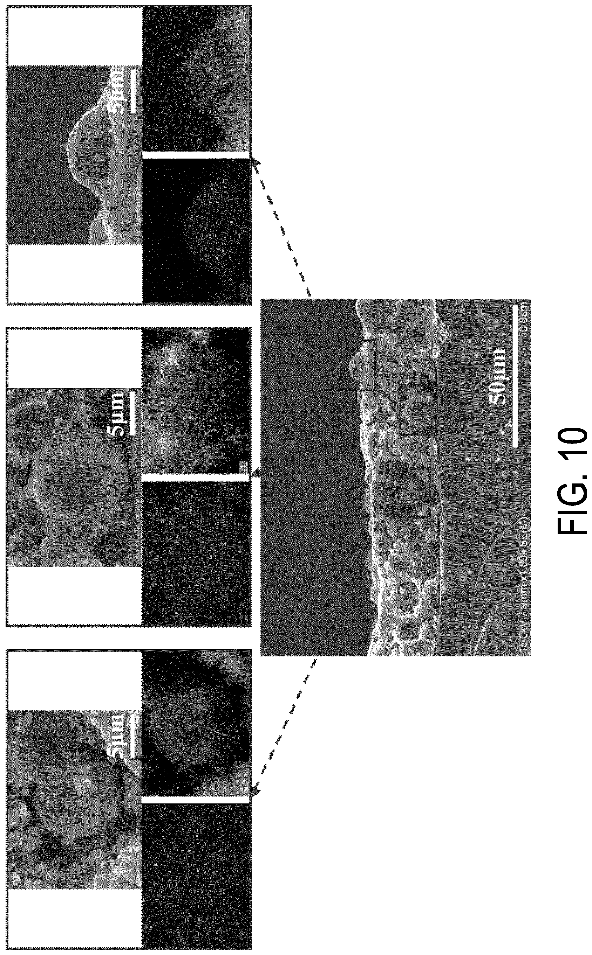

In the embodiment, SEM/EDS is utilized to analyze the distribution of Ni element and F element in the comparative example and the demonstrative example. FIG. 9 shows the SEM /EDS analysis result of the comparative example. As shown in FIG. 9, in the cross section of the electrode plate of the comparative example, the F element is mainly provided by the Li-Nafion polymer material, and the Ni element is provided by the NCM material. However, it can be seen from FIG. 9 that the F signal and the Ni signal are not overlapped. It means that the Li-Nafion polymer material is not uniformly coated on the surface of the NCM material. Furthermore, FIG. 10 shows the SEM/EDS analysis result of the demonstrative example of the present disclosure. As shown in FIG. 10, the F signal and the Ni signal are overlapped. It means that the Li-Nafion polymer material is uniformly coated on the surface of the NCM material. From the above, after the surface modification of the NCM material is carried out by the mechanical fusion mixing method of the present disclosure, the obtained NCM@C material is easier to combine with the Li-Nafion polymer material in the subsequent mixing process, so that the Li-Nafion polymer material is uniformly coated on the surface of NCM@C materials.

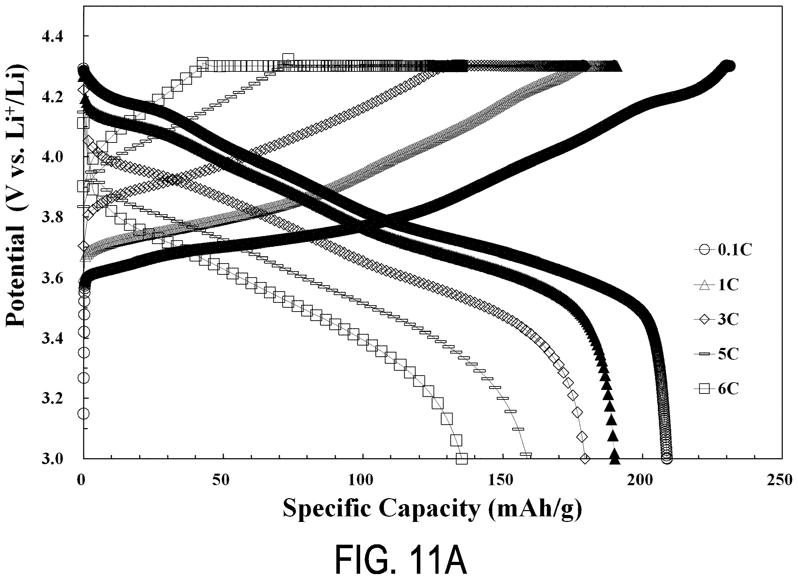

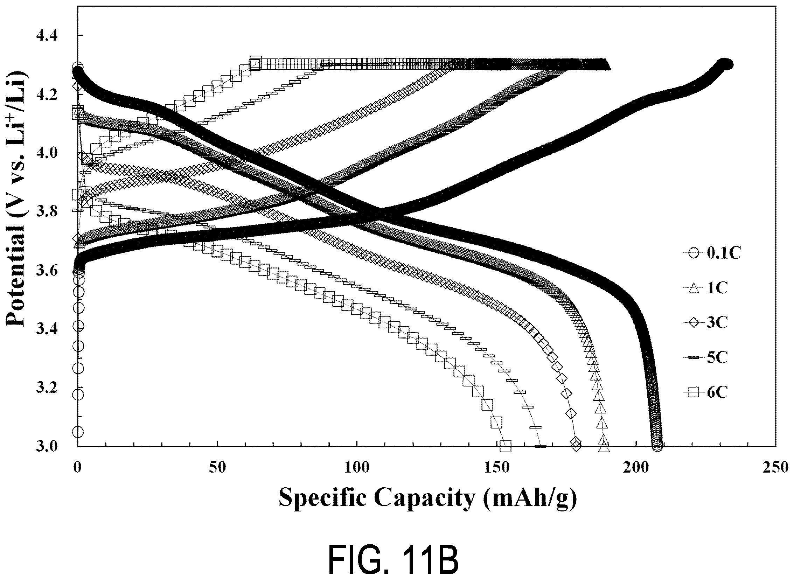

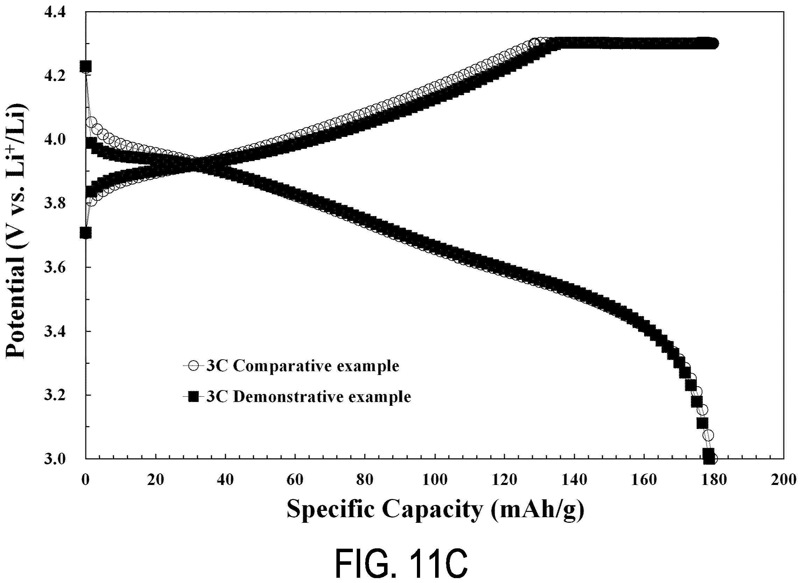

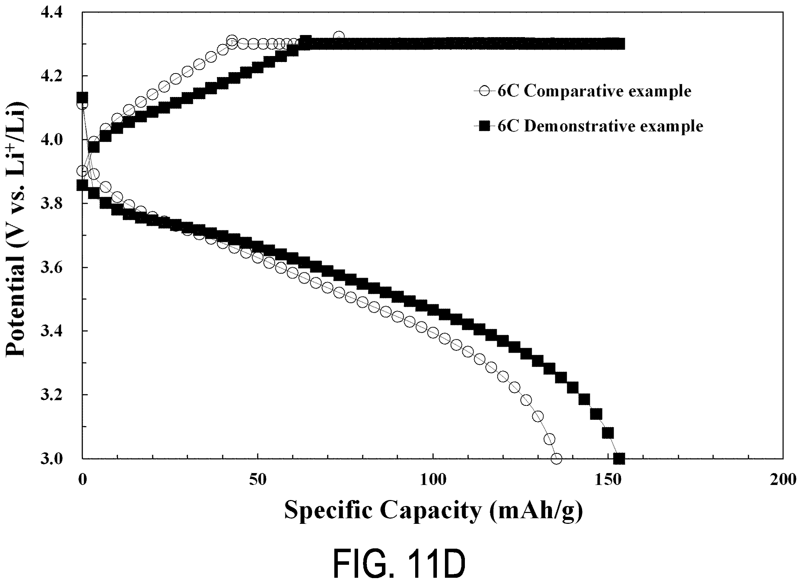

For the CR2032 button batteries obtained in the comparative example and the demonstrative example, the charge and discharge performance can be analyzed at different charge and discharge rates, such as 0.1C, 1C, 3C, 5C, and 6C. FIG. 11A shows a cyclic charge/discharge testing of the comparative example at 0.1C/1C/3C/5C/6C. FIG. 11B shows a cyclic charge/discharge testing of the demonstrative example of the present disclosure at 0.1C/1C/3C/5C/6C. FIG. 11C is a comparison chart illustrating the specific capacity of the comparative example and the specific capacity of the demonstrative example of the present disclosure charged and discharged at 3C. FIG. 11D is a comparison chart illustrating the specific capacity of the comparative example and the specific capacity of the demonstrative example of the present disclosure charged and discharged at 6C. Table 1 lists the analysis results of the comparative example and the demonstrative example under the charge and discharge rate at 3C/5C/6C. The results of FIG. 11A to FIG. 11D and Table 1 show that at a high rate (above 3C) charge-discharge rate, the demonstrative example of the NCM@C material with the Li-Nafion polymer material uniformly coated thereon has better charge and discharge performance.

**Table 1 is a comparison table of charge and discharge capacities at different charge and discharge rates**

| Sample | CD rate | Charge capacity (mAh /g) | Discharge capacity (mAh /g) |
|---|---|---|---|
| Comparative example | 3C | 179.76 | 179.42 |
| | 5C | 159.40 | 158.74 |
| | 6C | 135.33 | 135.33 |
| Demonstrative example | 3C | 178.68 | 178.55 |
| | 5C | 166.23 | 165.78 |
| | 6C | 153.19 | 153.18 |

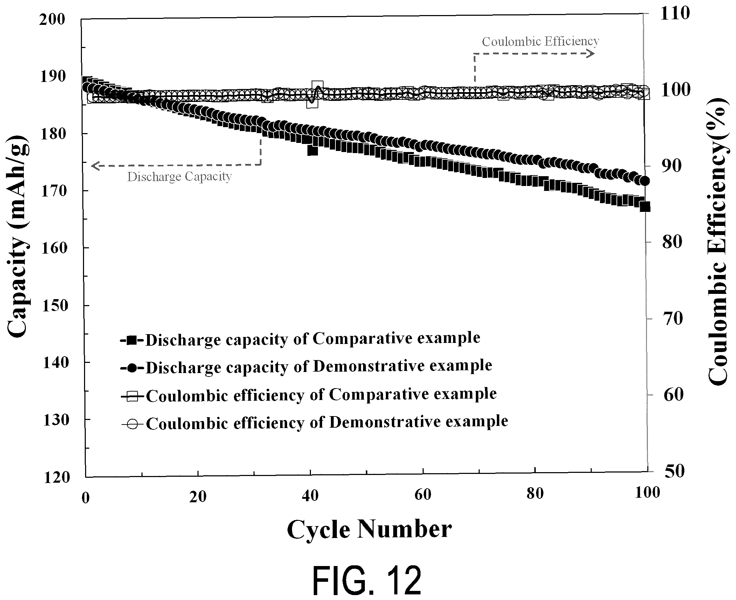

FIG. 12 shows a cyclic charge/discharge testing of the comparative example and the demonstrative example of the present disclosure under 1CC/1CD cycle test conditions. Under 1CC/1CD cycle test conditions, the capacity retention rate of the comparative example is 88% after 100 cycles, and the capacity retention rate of the demonstrative example is 91% after 100 cycles. Different from the comparative example where the Li-Nafion polymer material is directly coated on NCM material, the mechanical fusion mixing method is used in the present disclosure to pre-mix the conductive carbon and NCM material to obtain the NCM@C material, it helps to increase the uniformity of the Li-Nafion polymer material coating on the surfaces of the positive electrode material particles. It can not only increase the performance of high-rate charge and discharge, but also improve the life of charge and discharge cycles.

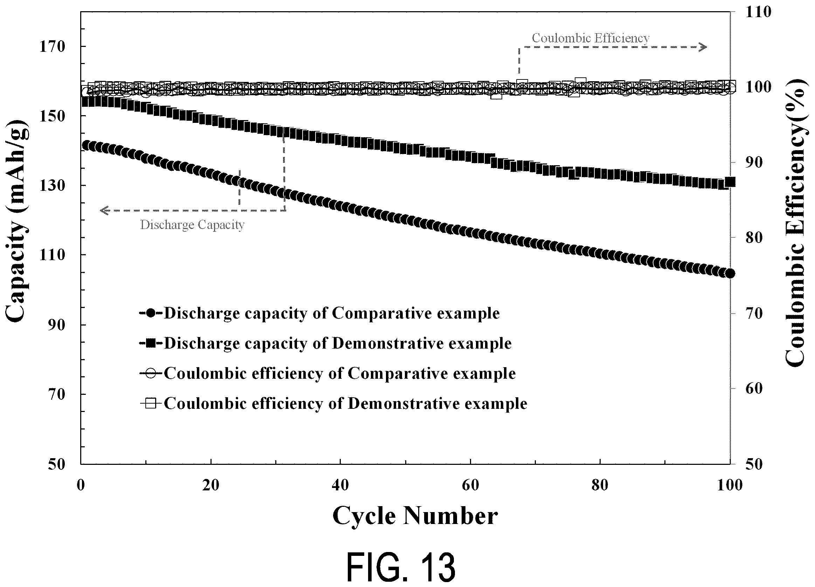

FIG. 13 shows a cyclic charge/discharge testing of the comparative example and the demonstrative example of the present disclosure under 6CC/6CD cycle test conditions. Under 6CC/6CD cycle test conditions, the capacity retention rate of the comparative example is 74% after 100 cycles, and the capacity retention rate of the demonstrative example is 84% after 100 cycles. Compared with the comparative example, the cycle life of the rapid charge and discharge of the demonstrative example is significantly improved. In other words, by using the mechanical fusion mixing method of the present disclosure to pre-mix the conductive carbon, it helps to improve the uniformity of the Li-Nafion polymer material covering the positive electrode material. It not only improves the ion conductivity rate, but also significantly slows down the capacity decline of the positive electrode material.

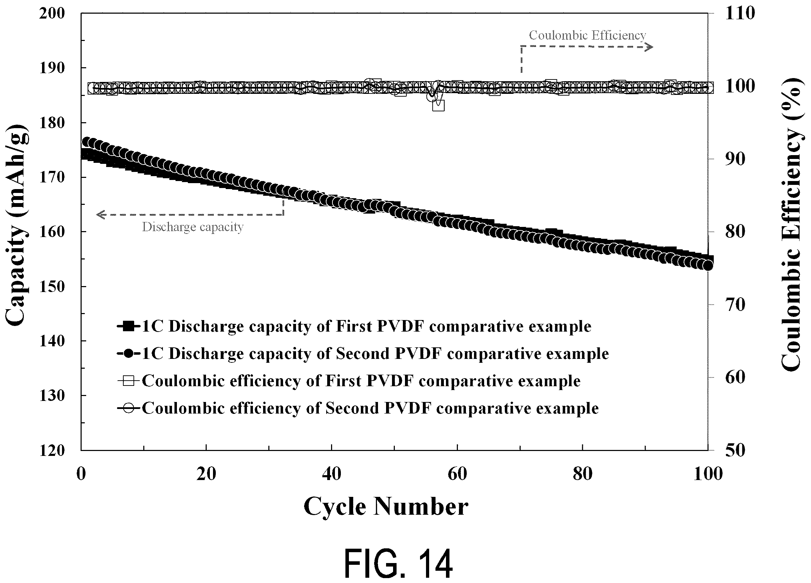

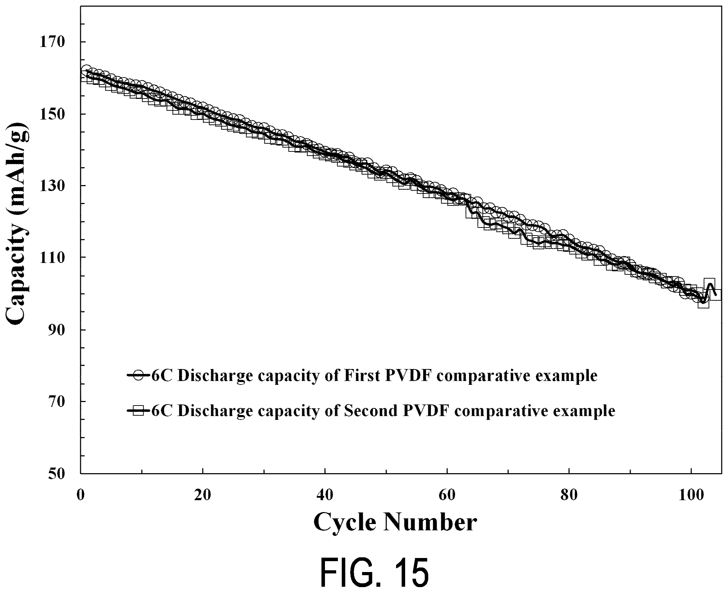

In addition, it should be noted that the dry mechanical fusion method is used to mix the conductive carbon to carry out the pretreatment of the surface modification of the positive electrode material particles, and the pretreatment is further cooperated with the Li-Nafion polymer material with the long-chain hydrophobic segment. Under the same preparation conditions, the Li-Nafion polymer material used in the aforementioned comparative example is replaced by PVDF to obtain the first PVDF comparative example of. Furthermore, the Li-Nafion polymer material is replace by PVDF to mix the NCM@C material, which is obtained by pre-mixing the conductive carbon and the NCM material through the mechanical fusion mixing method, and then the PVDF-coated NCM@C material is obtained as the second PVDF comparative example. FIG. 14 shows a cyclic charge/discharge testing of the first PVDF comparative example and the second PVDF comparative example under 1CC/1CD cycle test conditions. FIG. 15 shows a cyclic charge/discharge testing of the first PVDF comparative example and the second PVDF comparative example under 6CC/6CD cycle test conditions. Referring to FIG. 13 to FIG. 15, it can be seen that in case of that PVDF is used instead of Li-Nafion polymer material as the binder, even if the pretreatment of the surface modification of the positive electrode material particles is carried out by mixing the conductive carbon in the dry mechanical fusion method, the obtained composite electrode does not show the improvement in cycle life at high charge-discharge rates. In other words, the pretreatment of the surface modification of the positive electrode material particles by mixing the conductive carbon in dry mechanical fusion method is more suitable for the application of Li-Nafion polymer material as the binder. Certainly, the Li-Nafion polymer material may also be replaced by other polymer material binder with long-chain hydrophobic segments. The present disclosure is not limited thereto and not redundantly described hereafter.

In summary, the present disclosure provides a composite electrode and a preparation method thereof for a secondary battery. The conductive carbon is pre-coated on the surface of the high-nickel NCM positive electrode material through a dry mechanofusion method to improve the surface hydrophobicity of the high-nickel NCM positive electrode material and improve the coating performance of the lithiated Nafion (Li-Nafion) polymer material in the subsequent process, so that the original spherical secondary particle morphology of the high-nickel NCM positive electrode material is maintained effectively. The dry mechanofusion process is fast and does not require additional solvent and gas protection. An appropriate amount of conductive carbon can be coated on the surface of the high-nickel NCM positive electrode material through the dry mechanofusion process, it helps to improve the hydrophobicity of the surface of the positive electrode material, and improve the coating performance of (Li-Nafion) polymer material on the surface of high-nickel NCM material, without affecting the morphology of the NCM positive electrode material. Furthermore, the Li-Nafion polymer material is used to replace the conventional binder (PVDF, PAA, CMC-SBR...) used in the secondary battery process. Since the Li-Nafion polymer material has excellent properties of ion-conducting, it can have a better capacity retention rate when the composite positive electrode is charged and discharged under high rate (6CC/6CD) conditions. In other words, by pre-treating the surface with the conductive carbon, it facilitates the Li-Nafion polymer material as the functional coating to be more uniformly coated on the surface of the high-nickel positive electrode material. Moreover, the performance of fast charging and discharging, and the cycle life are improved. In that, a fast and effective means to obtain a functional coating that can be used as a binder and uniformly coated is provided.

## Claims

1. A composite electrode (1), **characterized by** comprising:
an electrode plate (2) comprising a carrying surface (21); and
a composite positive electrode material layer (3) coated on the carrying surface (21) of the electrode plate (2), wherein the composite positive electrode material layer (3) comprises:
a plurality of positive electrode material particles (10) composed of ternary materials with the composition of Li[NiₓCo_{y}Mn_{z}]O₂, wherein x+y+z=1, 0.8<x<1, 0<y<0.2, and 0<z<0.2;
a first conductive carbon (20) pre-coated on surfaces of the plurality of positive electrode material particles (10) through a dry mechanical mixing method, wherein a weight percent of the first conductive carbon (20) relative to the plurality of positive electrode material particles (10) is ranged from 1 wt.% to 5.5 wt.%; and
a Li-Nafion polymer material (30) covering the surfaces of the plurality of positive electrode material particles (10) and bonded among the surfaces of the plurality of positive electrode material particles (10), wherein a weight percent of the Li-Nafion polymer material (30) relative to the plurality of positive electrode material particles (10) is ranged from 10 wt.% to 20 wt.%.

2. The composite electrode (1) according to claim 1, wherein the dry mechanical mixing method is a mechanical fusion method comprising steps of mixing at a first rotational speed of 600 rpm for 10 minutes and mixing at a second rotational speed of 4200 rpm for 30 minutes, and having an operating temperature ranged from 30°C to 40°C.

3. The composite electrode (1) according to claim 1, wherein the Li-Nafion polymer material (30) is mixed with a solvent to form a Li-Nafion polymer solution, and then mixed with the plurality of positive electrode material particles (10) and the first conductive carbon (20), wherein the Li-Nafion polymer solution has a weight percent concentration of 10 wt.%, the solvent is composed of ethanol and n-butanol, and a weight ratio of the ethanol to the n-butanol is 1:2.

4. The composite electrode (1) according to claim 1 or 2, wherein the composite positive electrode material layer (3) further comprises a second conductive carbon (40), and the second conductive carbon (40) is mixed with the plurality of positive electrode material particles (10) pre-coated with the first conductive carbon (20) and the Li-Nafion polymer material (30), wherein a weight percent of the second conductive carbon (40) relative to the plurality of positive electrode material particles (10) is ranged from 5.5 wt.% to 15 wt.%.

5. The composite electrode (1) according to any of the claims 1 to 4, wherein the composite positive electrode material layer (3) has a compacted density ranged from 3.1 g/cm³ to 3.3 g/cm³.

6. The composite electrode (1) according to any of the claims 1 to 5, wherein the electrode plate (2) is an aluminum plate.

7. The composite electrode (1) according to any of the claims 1 to 6, wherein the plurality of positive electrode material particles (10) have a first average particle size ranged from 10 µm to 20 µm, and the first conductive carbon (20) has a second average particle size ranged from 50 nm to 200 nm.

8. A preparation method of a composite electrode (1), **characterized by** comprising steps of:
(a) providing a plurality of positive electrode material particles (10) and a first conductive carbon (20), wherein the plurality of positive electrode material particles (10) are composed of ternary materials with the composition of Li[NiₓCo_{y}Mn_{z}]O₂, wherein x+y+z=1, 0.8<x<1, 0<y<0.2, and 0<z<0.2;
(b) coating the first conductive carbon (20) on surfaces of the plurality of positive electrode material particles (10) through a dry mechanical mixing method, wherein a weight percent of the first conductive carbon (20) relative to the plurality of positive electrode material particles (10) is ranged from 1 wt.% to 5.5 wt.%;
(c) providing a Li-Nafion polymer material (30), wherein a weight percent of the Li-Nafion polymer material (30) relative to the plurality of positive electrode material particles (10) is ranged from 10 wt.% to 20 wt.%;
(d) mixing the Li-Nafion polymer material (30) and the plurality of positive electrode material particles (10) pre-coated with the first conductive carbon (20) to form a composite positive electrode material slurry;
(e) coating the composite positive electrode material slurry on a carrying surface (21) of an electrode plate (2); and
(f) drying to form the composite electrode (1), wherein the Li-Nafion polymer material (30) covers the surfaces of the plurality of positive electrode material particles (10) and is bonded among the surfaces of the plurality of positive electrode material particles (10).

9. The preparation method of the composite electrode (1) according to claim 8, wherein the dry mechanical mixing method in the step (b) is a mechanical fusion method comprising steps of mixing at a first rotational speed of 600 rpm for 10 minutes and mixing at a second rotational speed of 4200 rpm for 30 minutes, and having an operating temperature ranged from 30°C to 40°C.

10. The preparation method of the composite electrode (1) according to claim 8 or 9, wherein the Li-Nafion polymer material (30) provided in the step (c) is mixed with a solvent to form a Li-Nafion polymer solution, and then mixed with the plurality of positive electrode material particles (10) and the first conductive carbon (20), wherein the Li-Nafion polymer solution has a weight percent concentration of 10 wt.%, the solvent is composed of ethanol and n-butanol, and a weight ratio of the ethanol to the n-butanol is 1:2.

11. The preparation method of the composite electrode (1) according to any of the claims 8 to 10 , wherein a second conductive carbon (40) is further added in the step (d), so that the second conductive carbon (40) is mixed with the plurality of positive electrode material particles (10) pre-coated with the first conductive carbon (20) and the Li-Nafion polymer material (30), wherein a weight percent of the second conductive carbon (40) relative to the plurality of positive electrode material particles (10) is ranged from 5.5 wt.% to 15 wt.%.

12. The preparation method of the composite electrode (1) according to any of the claims 8 to 11, wherein the composite positive electrode material slurry is coated on the carrying surface (21) of the electrode plate (2) through a doctor blade method in the step (e), and the composite positive electrode material slurry has a surface density ranged from 9 mg/cm² to 12 mg/cm².

13. The preparation method of the composite electrode (1) according to any of the claims 8 to 12, wherein the composite positive electrode material layer (3) has a compacted density ranged from 3.1 g/cm³ to 3.3 g/cm³.

14. The preparation method of the composite electrode (1) according to any of the claims 8 to 13, wherein the electrode plate (2) is an aluminum plate.

15. The preparation method of the composite electrode (1) according to any of the claims 8 to 14, wherein the plurality of positive electrode material particles (10) have a first average particle size ranged from 10 µm to 20 µm, and the first conductive carbon (20) has a second average particle size ranged from 50 nm to 200 nm.

## Amended claims

### Amended claims in accordance with Rule 137(2) EPC.

1. A composite electrode (1), **characterized by** comprising:
an electrode plate (2) comprising a carrying surface (21); and
a composite positive electrode material layer (3) coated on the carrying surface (21) of the electrode plate (2), wherein the composite positive electrode material layer (3) comprises:
a plurality of positive electrode material particles (10) composed of ternary materials with the composition of Li[NiₓCo_{y}Mn_{z}]O₂, wherein x+y+z=1, 0.8<x<1, 0<y<0.2, and 0<z<0.2;
a first conductive carbon (20) pre-coated on surfaces of the plurality of positive electrode material particles (10) through a dry mechanical mixing method, wherein a weight percent of the first conductive carbon (20) relative to the plurality of positive electrode material particles (10) is ranged from 1 wt.% to 5.5 wt.%; and
a Li-Nafion polymer material (30) covering the surfaces of the plurality of positive electrode material particles (10) and bonded among the surfaces of the plurality of positive electrode material particles (10), wherein a weight percent of the Li-Nafion polymer material (30) relative to the plurality of positive electrode material particles (10) is ranged from 10 wt.% to 20 wt.%.

2. The composite electrode (1) according to claim 1, wherein the dry mechanical mixing method is a mechanical fusion method comprising steps of mixing at a first rotational speed of 600 rpm for 10 minutes and mixing at a second rotational speed of 4200 rpm for 30 minutes, and having an operating temperature ranged from 30°C to 40°C.

3. The composite electrode (1) according to claim 1, wherein the Li-Nafion polymer material (30) is mixed with a solvent to form a Li-Nafion polymer solution, and then mixed with the plurality of positive electrode material particles (10) and the first conductive carbon (20), wherein the Li-Nafion polymer solution has a weight percent concentration of 10 wt.%, the solvent is composed of ethanol and n-butanol, and a weight ratio of the ethanol to the n-butanol is 1:2.

4. The composite electrode (1) according to claim 1 or 2, wherein the composite positive electrode material layer (3) further comprises a second conductive carbon (40), and the second conductive carbon (40) is mixed with the plurality of positive electrode material particles (10) pre-coated with the first conductive carbon (20) and the Li-Nafion polymer material (30), wherein a weight percent of the second conductive carbon (40) relative to the plurality of positive electrode material particles (10) is ranged from 5.5 wt.% to 15 wt.%.

5. The composite electrode (1) according to any of the claims 1 to 4, wherein the composite positive electrode material layer (3) has a compacted density ranged from 3.1 g/cm³ to 3.3 g/cm³.

6. The composite electrode (1) according to any of the claims 1 to 5, wherein the electrode plate (2) is an aluminum plate.

7. The composite electrode (1) according to any of the claims 1 to 6, wherein the plurality of positive electrode material particles (10) have a first average particle size ranged from 10 µm to 20 µm, and the first conductive carbon (20) has a second average particle size ranged from 50 nm to 200 nm, wherein the first average particle size is obtained through a SEM analysis of the plurality of positive electrode material particles (10), and the second average particle size is obtained through a SEM analysis of the first conductive carbon (20).

8. A preparation method of a composite electrode (1), **characterized by** comprising steps of:
(a) providing a plurality of positive electrode material particles (10) and a first conductive carbon (20), wherein the plurality of positive electrode material particles (10) are composed of ternary materials with the composition of Li[NiₓCo_{y}Mn_{z}]O₂, wherein x+y+z=1, 0.8<x<1, 0<y<0.2, and 0<z<0.2;
(b) coating the first conductive carbon (20) on surfaces of the plurality of positive electrode material particles (10) through a dry mechanical mixing method, wherein a weight percent of the first conductive carbon (20) relative to the plurality of positive electrode material particles (10) is ranged from 1 wt.% to 5.5 wt.%;
(c) providing a Li-Nafion polymer material (30), wherein a weight percent of the Li-Nafion polymer material (30) relative to the plurality of positive electrode material particles (10) is ranged from 10 wt.% to 20 wt.%;
(d) mixing the Li-Nafion polymer material (30) and the plurality of positive electrode material particles (10) pre-coated with the first conductive carbon (20) to form a composite positive electrode material slurry;
(e) coating the composite positive electrode material slurry on a carrying surface (21) of an electrode plate (2); and
(f) drying to form the composite electrode (1), wherein the Li-Nafion polymer material (30) covers the surfaces of the plurality of positive electrode material particles (10) and is bonded among the surfaces of the plurality of positive electrode material particles (10).

9. The preparation method of the composite electrode (1) according to claim 8, wherein the dry mechanical mixing method in the step (b) is a mechanical fusion method comprising steps of mixing at a first rotational speed of 600 rpm for 10 minutes and mixing at a second rotational speed of 4200 rpm for 30 minutes, and having an operating temperature ranged from 30°C to 40°C.

10. The preparation method of the composite electrode (1) according to claim 8 or 9, wherein the Li-Nafion polymer material (30) provided in the step (c) is mixed with a solvent to form a Li-Nafion polymer solution, and then mixed with the plurality of positive electrode material particles (10) and the first conductive carbon (20), wherein the Li-Nafion polymer solution has a weight percent concentration of 10 wt.%, the solvent is composed of ethanol and n-butanol, and a weight ratio of the ethanol to the n-butanol is 1:2.

11. The preparation method of the composite electrode (1) according to any of the claims 8 to 10 , wherein a second conductive carbon (40) is further added in the step (d), so that the second conductive carbon (40) is mixed with the plurality of positive electrode material particles (10) pre-coated with the first conductive carbon (20) and the Li-Nafion polymer material (30), wherein a weight percent of the second conductive carbon (40) relative to the plurality of positive electrode material particles (10) is ranged from 5.5 wt.% to 15 wt.%.

12. The preparation method of the composite electrode (1) according to any of the claims 8 to 11, wherein the composite positive electrode material slurry is coated on the carrying surface (21) of the electrode plate (2) through a doctor blade method in the step (e), and the composite positive electrode material slurry has a surface density ranged from 9 mg/cm² to 12 mg/cm².

13. The preparation method of the composite electrode (1) according to any of the claims 8 to 12, wherein the composite positive electrode material layer (3) has a compacted density ranged from 3.1 g/cm³ to 3.3 g/cm³.

14. The preparation method of the composite electrode (1) according to any of the claims 8 to 13, wherein the electrode plate (2) is an aluminum plate.

15. The preparation method of the composite electrode (1) according to any of the claims 8 to 14, wherein the plurality of positive electrode material particles (10) have a first average particle size ranged from 10 µm to 20 µm, and the first conductive carbon (20) has a second average particle size ranged from 50 nm to 200 nm, wherein the first average particle size is obtained through a SEM analysis of the plurality of positive electrode material particles (10), and the second average particle size is obtained through a SEM analysis of the first conductive carbon (20).
